# EUROPEAN PATENT APPLICATION

(11) **EP 1 876 805 A1**
(43) Date of publication of application: **09.01.2008**
(21) Application number: 06300768.6
(22) Date of filing: 06.07.2006
(51) Int. Cl.: H04M 3/436, H04M 7/00

(54) **URL sent to caller for managing call**

(71) Applicant: Alcatel Lucent, 75008 Paris (FR)
(72) Inventor: Litteaut, Jacues, FR 78160, Marly Le Roi (FR); Coulon, Stephane, FR 95810, Arronville (FR)
(74) Representative: Rausch, Gabriele

(57) **Abstract**

The invention relates to a system comprising a telecommunications terminal of a caller with a call server for managing calls at a caller location and a telecommunications terminal of a callee with a call server for managing calls at a callee location. When setting up a call between the caller and the callee then capability characteristics of the caller's terminal are forwarded within the call setup and analyzed by the callee call server to adapt accordingly a predefined call forwarding from the callee towards the caller. In an embodiment, the call forwarding is considered as a predefined resource identified via a specific URL location to be forward by the callee call server to the caller's terminal when setting up of the call forwarding. This is performed if such format of a resource with URL location complies with a capability characteristic of the caller's terminal previously forwarded to the callee.

## Description

### Technical Field

The present invention relates to a method for setting up of a call forwarding. Furthermore, it is related to a system comprising a telecommunications terminal of a caller with a call server for managing calls at a caller location and a telecommunications terminal of a callee with a call server for managing calls at a callee location. It is also related to a computer readable medium comprising codes to be executed on caller and callee terminals for setting up a call forwarding.

### Background of the invention

In the actual telecommunications world, the call to a callee (called party) who is busy, absent or automatically forwarded leads to switch the call towards a vocal message, another callee or possibly to the option to record an automatic call back. It is of interest for a user having adequate terminals to chose one or several actions to perform when the callee is not available while not answering the activated call. This would give to that user (caller) more flexibility when performing a call.

In US6,571,094 is described a way for a user to activate remotely a call forwarding feature on his/her wire-line phone by accessing internet and entering a feature code. That feature code is received by a remote server having access to an IP user directory and forwarding necessary information for invoking feature in a determined manner to a service control point. The service control point recognizes the feature code as a request to invoke the remote call forwarding feature on the user's wire-line telephone so that calls directed to that wire-line telephone are forwarded to, for example, the user's cellular phone. Receipt of that feature code by the service control point identifies the user and the feature to be invoked for that user. In such a way, information is retrieved relating to the specific equipment (e.g. some PBX or local switch) on which the call forwarding is to be invoked, how and where to contact that PBX or switch, and what specifically must be sent to that PBX or switch to invoke the feature on the user's telephone line.

In US6, 882,838 is described a system and method for providing dynamic call disposition service to a wireless terminal that may be occupied or unoccupied. In response to a call to the wireless terminal in a voice domain, call disposition options are provided to the wireless terminal in a data domain. A call disposition action is then taken according to an option selection made at the wireless terminal as part of a cooperative effort between resource in the voice and data domains. Both prior arts handle the callee side approach but do not consider the caller side.

### Summary of the invention

The object of the present invention is to provide maximum flexibility to the caller when setting up a call to a callee, particularly when the callee does not take off that call.

This object is achieved in accordance with the invention by applying the following method for setting up of a call forwarding. The method comprises the step to forward capability characteristics of the caller's terminal to the callee within call set-up message from the caller. The method comprises also the step to adapt a predefined call forwarding from the callee towards the caller according to the received capability characteristics of the caller's terminal. Such a method is particularly advantageous in the case the callee does not take off the call initiated by the caller i.e. when a call forwarding according to the invention is activated.
In an embodiment according to the invention, the call forwarding is configured as a predefined resource identified via a specific Internet address i.e. Universal Resource Locator (URL) location. Such address has to be forward to the caller's terminal when setting up the call forwarding if such format of a resource identified by an Internet address complies with a capability characteristic of the caller's terminal previously forwarded to the callee. Advantageously, a predefined call forwarding can be different for several callers i.e. being caller specific.

The invention further relates to a system comprising a telecommunications terminal of a caller with a call server for managing calls at a caller location and a telecommunications terminal of a callee with a call server for managing calls at a callee location. When setting up a call between the caller and the callee then capability characteristics of the caller's terminal are forwarded within the call setup and analyzed by the callee call server to adapt accordingly a predefined call forwarding from the callee towards the caller. In an advantageous embodiment according to the invention, the call forwarding is considered as a predefined resource identified via a specific URL location to be forward by the callee call server to the caller's terminal when setting up of the call forwarding. This is performed if such format of a resource with URL location complies with a capability characteristic of the caller's terminal previously forwarded to the callee. Within the scope of the invention, it is clear that caller's terminal can be a single terminal like a multimedia telecommunications terminal or can consist of several terminals like a telecommunications terminal, a PC and/or softphone somehow interconnected between each other possibly via some Private Branch Exchange (PBX) or dedicated server.

In some further embodiment according to the invention, the system comprises a web server where is stored a portal associated to the callee. The portal enables the caller to have at disposal several choices offered by the callee when being called by the caller. Advantageously, every user may have such an individual portal that presents to any or only to some callers a plurality of actions.

The invention relates also to a computer readable medium comprising codes to be executed on caller and callee terminals for setting up a call forwarding. The codes comprise some codes which forward capability characteristics of the caller's terminal to the callee within the call setup message from the caller when executed on caller's terminal. The codes comprise further codes when executed on callee terminal which adapt a predefined call forwarding from the callee towards the caller according to the received capability characteristics of the caller's terminal. In some embodiment according to the invention, the codes comprise a predefined resource identified via a specific Internet address i.e. URL location. When those codes are executed on callee terminal then that specific URL location is forwarded to the caller's terminal in case such format of a resource with URL location complies with a capability characteristic of the caller's terminal previously forwarded to the callee. In a further embodiment according to the invention, some codes to be executed on callee terminal define an association of a portal to the callee which enables the caller to have at disposal several choices offered by the callee when the caller try to reach the callee by phone.

Advantageous developments of the invention are described in the dependent claims, the following description and the drawings.

### Description of the drawings

An exemplary embodiment of the invention will now be explained further with the reference to the attached drawings in which:
Fig. 1 is a schematic view of a system according to the invention;
Fig. 2 is a kind of flow chart detailing the steps of the present invention.

### Detailed description of preferred embodiments

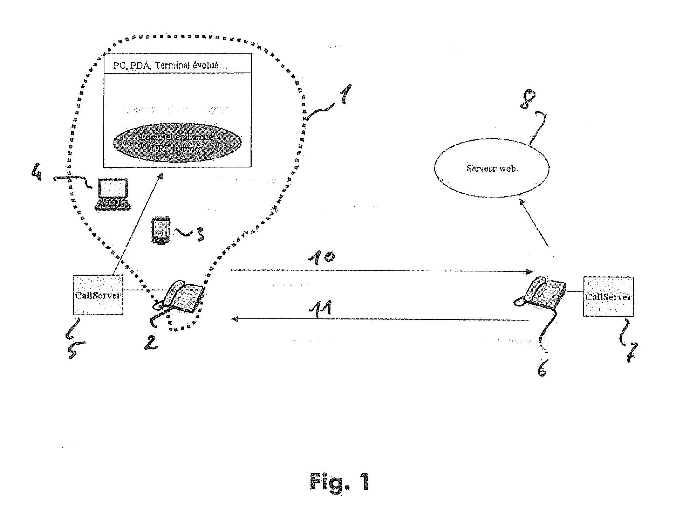

On figure 1 is shown the caller (calling party) environment 1 comprising a telecommunications terminal connected to a call server 5, a PDA 3 and a PC 4. Such caller environment 1 is an example for caller's terminal as used in the present invention. Other environment consisting of e.g. a single terminal like a softphone with an integrated screen and possibilities to browse on the Internet could also be conceivable within the scope of the present invention. On figure 1 is shown also the callee (called party) environment with a telecommunications terminal 6 connected to a call server 7 and to a server web 8. When the method according to the present invention is applied, then capability characteristics of the caller's terminal is forwarded to the callee within the call setup message 10 from the caller performing a call to that callee. Such capability characteristics comprise information if one of the caller's terminal is able to treat some specific message from the callee like, for example, a web page. After such a step 10, the callee is able to adapt a predefined call forwarding 11 towards the caller according to the received capability characteristics of the caller's terminal. If for example caller's terminal does not comprise capabilities to treat web pages then callee may chose as call forwarding a vocal message which may possibly be nevertheless caller specific. In the more interesting case when the caller terminal is capable to treat some resource identified via an Internet address then the specific URL location of some predefined resource possibly stored on some server web 8 interconnected to the callee's terminal 6 is forwarded in step 11 as call forwarding from the callee towards the caller. In that case, the caller obtains the possibility to display the corresponding predefined resource identified by that Internet address via the URL location. In some case, the resource is then display automatically to some predefined caller terminal. In an alternative, it can be the caller who chooses to display it on the PDA 3 or PC 4 or some other capable terminal. In all the cases, the procedure to display the resource initiates some browser which retrieves the predefined resource stored on the server web 8. Such predefined resource could be caller specific. It could be also specific to the situation encountered by the caller when performing the call i.e. the reason why the callee does not take off the call initiated by the caller. For example, if the callee is in a busy state, some different predefined resource may be forwarded to the caller in comparison to the case e.g. the callee is simply absent.

In the call setup message from the caller to the callee 10 is encapsulated the capability characteristics of the caller's terminal with the information if at least one of the caller's terminal is able to read web pages. The call server 7 from the callee receives such a message and after checking it, transmits in the call forwarding the corresponding URL location to which the caller will be forwarded if found in that received information some indication of a caller terminal capable to treat a web page. A soft switch, PBX or some server dedicated to treat all the calls destined to that caller receives such message. After controlling the corresponding address, it forwards the URL location to the terminal of the caller adapted to treat such web page. Once that terminal with some display receives the corresponding Internet address, a browser is then initiated to catch the resource identified by that URL location. According to the possibility offered by that resource, the caller may be able to activate some action proposed by the server web 8 of the callee. For example, he/she may have the option to record some message possibly multimedia, or to define some call back or other possibilities. For some more advanced terminals like a softphone or PDA with telecommunications features or able to cope with SIP protocols, all that steps can be performed by such single terminal being part of caller's environment (caller's terminal).

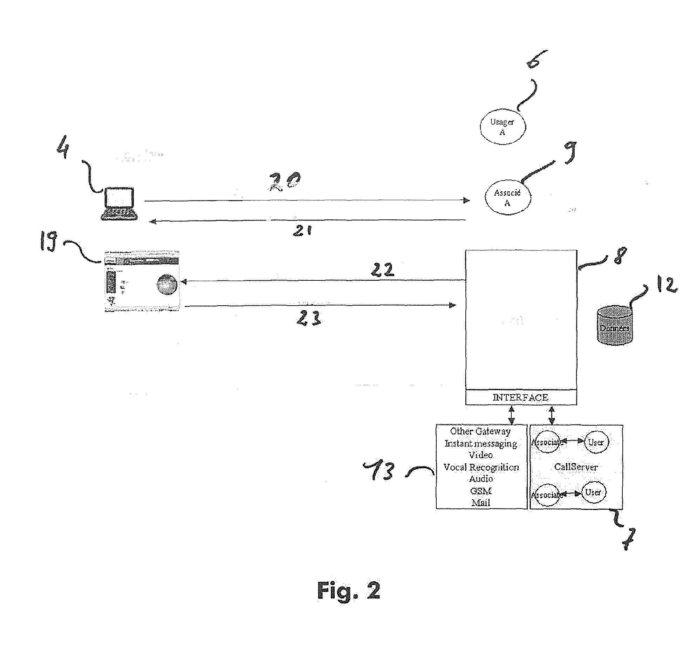

On figure 2 is described some kind of flow chart showing steps of the present invention. In the case shown on figure 2, is associated to the callee 6 a portal stored possibly but not necessarily on the web server 8. The caller 1 performs some call 20 towards a callee to be reached at some terminal being possibly a more advanced terminal with telecommunications features like Voice over IP and/or SIP compatible. To such a call 20 is affected a portal 9 of the callee. Such portal 9 will systematically forward back any call from some caller to a web page by forwarding back to that caller 21 the Internet address of the corresponding resource managing the actions let available by the callee to the caller. This enables the caller to display 19 the web page 22 corresponding to that resource. Such web page comprises different options what to do with the present call like forwarding the call to some other person who may be more appropriate to deal with the caller or programming some call back in the future or any other options. The different options may be stored in some storage 12 to be retrieved by the web server 8. It is that web server 8 which has to manage the option chosen by the caller like e.g. forwarding the call to some other collaborator using a specific gateway 13 and/or call server 7. In such a way, the callee is free to take off or not the call initiated by the caller or letting such a call be managed by the predefined resource according to different situation.

## Claims

1. A method for setting up of a call forwarding, the method comprises the following steps:
• Forwarding capability characteristics of the caller's terminal to the callee within the call set-up message from the caller;
• Adapting a predefined call forwarding from the callee towards the caller according to the received capability characteristics of the caller's terminal.

2. The method according to claim 1 whereby the call forwarding is activated in the case the callee does not take off the call initiated by the caller.

3. The method according to claim 1 whereby the call forwarding is configured as a predefined resource identified via a specific URL location to be forward to the caller's terminal when setting up of the call forwarding if such format of a resource with URL location complies with a capability characteristic of the caller's terminal previously forwarded to the callee.

4. The method according to claim 1 whereby the predefined call forwarding is caller specific.

5. A system comprising a telecommunication terminal of a caller with a call server for managing calls at a caller location and a telecommunication terminal of a callee with a call server for managing calls at a callee location such that when setting up a call between the caller and the callee, capability characteristics of the caller's terminal are forwarded within the call set-up and analysed by the callee call server to adapt accordingly a predefined call forwarding from the callee towards the caller.

6. The system according to claim 5 wherein the call forwarding is configured as a predefined resource identified via a specific URL location to be forward by the callee call server to the caller's terminal when setting up of the call forwarding if such format of a resource with URL location complies with a capability characteristic of the caller's terminal previously forwarded to the callee.

7. The system according to claim 6 wherein a portal is associated to the callee stored on a web server enabling the caller to have at disposal several choices offered by the callee with its call forwarding.

8. A computer readable medium comprising codes to be executed on caller and callee terminals for setting up a call forwarding, while the codes are **characterized in that** some codes when executed on caller terminal forward capability characteristics of the caller's terminal to the callee within the call set-up message from the caller while other codes when executed on callee terminal adapt a predefined call forwarding from the callee towards the caller according to the received capability characteristics of the caller's terminal.

9. The computer readable medium according to claim 8 wherein some codes comprise a predefined resource identified via a specific URL location while when those codes are executed on callee terminal then that specific URL location is forwarded to the caller's terminal in case such format of a resource with URL location complies with a capability characteristic of the caller's terminal previously forwarded to the callee.

10. The computer readable medium according to claim 9 wherein some codes to be executed on callee terminal comprise an association of a portal to the callee enabling the caller to have at disposal several choices offered by the callee with its call forwarding.
